# EUROPEAN PATENT SPECIFICATION

(11) **EP 0 820 412 B1**
(45) Date of publication and mention of the grant of the patent: **23.06.2004**
(21) Application number: 96911167.3
(22) Date of filing: 23.04.1996
(51) Int. Cl.: B65D 65/40, B32B 33/00

(54) **A METHOD FOR PRODUCING A PACKAGING LAMINATE**
HERSTELLUNG EINER MEHRSCHICHTFOLIE FÜR VERPACKUNGEN
LA PRODUCTION D'UN STRATIFIE POUR EMBALLAGE

(30) Priority: 24.04.1995 SE 9501488
(43) Date of publication of application: 28.01.1998
(73) Proprietor: Tetra Laval Holdings & Finance SA, 1009 Pully (CH)
(72) Inventor: BERLIN, Mikael, S-227 86 Lund (SE); HENNINGSSON, Karin, S-240 13 Genarp (SE)
(74) Representative: Sundell, Hakan
(86) International application number: PCT/SE1996/000522
(87) International publication number: WO 1996/033923

(56) References cited:
- EP-A- 0 514 137
- QUESTEL-ORBIT, File WPIL, Derwent Accession No. 94-114861; & JP,A,06 064 111, (TOPPAN PRINTING CO LTD), 8 Mars 1994.
- QUESTEL-ORBIT, File WPIL, Derwent Accession No. 94-354371; & JP,A,06 278 741, (TOPPAN PRINTING CO LTD), 4 Oktober 1994.
- Encyclopedia of Polymer Science and Engineering, vol. 1 (1985); John Wiley & Sons, New York (US); p. 561, 562, 615
- Encyclopedia of Polymer Science and Engineering, vol. 17 (1989); John Wiley & Sons, New York (US); p. 403, 416-420
- Encyclopedia of Polymer Science and Engineering, vol. 1 (1985); John Wiley & Sons, New York (US); p. 538
- Encyclopedia of Polymer Science and Engineering, vol. 3 (1985); John Wiley & Sons, New York (US); p. 552

## Description

### TECHNICAL FIELD

The present invention relates to a method of producing a packaging laminate for a liquid-tight package, said packaging laminate comprising a core layer of paper or paperboard, and outer layers of a polylactide which are applied on both sides of the core layer and are bonded with good bonding or adhesive strength to the interjacent core layer by intermediary of a layer of an ethyl vinyl acetate copolymer.

### BACKGROUND ART

In the packaging art, use is often made of liquid-tight packages of a single-use, disposable nature which are produced from a sheet or web-shaped packaging laminate of the type which has a core layer of rigid, but foldable material, and outer, liquid-tight layers on both sides of the core layer.

One such package which is very well known in the art is the Tetra Brik® which is produced by fold forming of a web-shaped packaging material which is provided with crease lines and which comprises a core layer of paper or paperboard and outer, liquid-tight thermoplastic coatings, normally polyethylene, which makes for the rational production of packages by heat sealing. Another well-known package of the type described by way of introduction is the Tetra Rex® which is produced from prefabricated sheet-shaped blanks which are provided with crease lines and which are made from a packaging laminate comprising a core layer of paper or paperboard and outer, liquid-tight thermoplastic coatings, preferably of polyethylene.

In addition, the material in both of the above-disclosed, and also other known so-called single use disposable, packages may be provided with one or more additional layers of the same or other materials than those mentioned above, for example metal and other types of plastics in order, when necessary, to impart to the finished package supplementary product protection properties such as gas tightness, light protection, etc.

A decisive factor in the choice of the composition of the packaging laminate is, on the one hand, that the package is to afford the best possible protection to the packed product and, on the other hand, that the packaging laminate makes possible a rational production of packages on an industrial scale using, for example, modern packing and filling machines of the type which forms, fills and seals packages at very high production output rates. Another important factor is naturally also that the packaging laminate must be easy to produce and that the thus produced package must be easy to handle and convenient to use.

At the same rate as more stringent demands are being placed on greater savings in raw materials exploitation and on increased recycling and reuse of consumed packages, materials research and development in the packaging industry has recently focused more and more on producing and developing packaging materials that, to a greater extent than hitherto, make possible ecological and environmentally friendly production and recycling of packages, without neglecting the demands on the product protection and convenience in handling of the packages themselves. In line with this development trend, interest has been particularly focused on so-called biopolymers and similar materials from renewable raw materials sources as substitute materials for the previously used petroleum-based plastics, such as polyethylene.

Packaging laminates comprising layers of non-petroleum based materials, for example biopolymers and similar biodegradable materials are per se known in the art.

For example, patent specification EP-A-0 542 143 describes a packaging laminate comprising layers of paper, paperboard and biopolymers in which two or more paper or paperboard layers are bonded to one another with the aid of interjacent binder or adhesive layers of biodegradable material, for example starch or starch-based materials. Packages are produced from the known packaging laminate as disclosed in EP-A-0 542 143 which, after their contemplated use, may be composted.

A serious drawback inherent in the above-described, and also other similar prior art packaging laminates, is however that the internal adhesive or bonding strength between the packaging laminate layers is unsatisfactory and often insufficient to reliably hold together the individual material layers in a well-integrated laminate structure, which is required in order that the packaging laminate does not delaminate or otherwise become damaged while the packaging laminate is being used in a package. In other words, it has proved difficult to produce, from prior art packaging laminates of the biodegradable or compostable type, packages which satisfy the requirements on the best possible protection for the packed product.

### OBJECTS OF THE INVENTION

One object of the present invention is therefore to provide a method of producing a packaging laminate according to the preamble portion of the claim.

### SOLUTION

This object will be attained according to the present invention by means of the method as defined in the appended Claim.

The terms "biodegradable" or "compostable" are taken to signify, both here and in the following description and appended Claims, that the material, when it is exposed to micro-organisms freely occurring in nature, is readily broken down or degraded (composted) into its natural component parts without the formation of environmentally unacceptable substances, and without the need to employ environmentally hazardous chemical degradation accelerators. The expressions "biodegradable" and "compostable", respectively, here encompass such materials as are broken down under natural conditions to their naturally occurring component parts in a quantity corresponding to at least 80 per cent, preferably at least 90 per cent and most preferably 100 per cent. Hereinafter, the expressions "biodegradable" and "compostable" will be employed alternatingly and interchangeably, but they are of equivalent import and meaning.

As has already been mentioned, it has previously proved difficult to produce compostable or biodegradable packaging laminates possessing superior internal bonding or adhesive strength between individual material layers in the packaging laminate structure. In particular, it has proved difficult to be able, with good bonding strength, to bond the two outer layers of biodegradable material to the interjacent core layer of biodegradable material, irrespective of whether the layers are bonded directly to one another or by the intermediary of a layer of biodegradable material serving as adhesive or binder between the core layer and each respective outer layer. For example, attempts to bond outer layers of polylactide (which is a known example of a biodegradable material) direct to a core layer of wood pulp fibres, for example paperboard, has failed because of insufficient bonding strength between the layers.

One explanation for the failure of earlier attempts to produce a well-integrated biodegradable or compostable packaging laminate may be that the two outer polylactide layers were extruded at far too low an extrusion temperature (at most approximately 200°C) which, on the other hand, must be low (i.e. at most approximately 200°C) in order to avoid thermal degradation of the polylactide.

Polylactide is a valuable example of a biodegradable material for which there has long been a wish in the art to be able to utilise as moisture or liquid barrier in a packaging laminate. Polylactide is readily available and degrades to almost 100 per cent under the action of naturally occurring micro-organisms. A further valuable property inherent in polylactide is that it is heat sealable, which makes polylactide particularly attractive as a material in the outer layers of the packaging laminate, which thereby makes possible the production of tight and mechanically strong and durable sealing joints or seams by heat sealing during the reforming of the packaging laminate into packages.

According to the present invention, the wish to be able to use polylactide as the outer moisture and liquid barrier layer in a packaging laminate is satisfied by means of a layer of an ethyl vinyl acetate copolymer (EVA) disposed between the core layer of the packaging laminate and each respective outer polylactide layer.

EVA is a biodegradable copolymer, as this expression is defined above, and has proved, in a surprisingly well-functioning manner, to be able to operate as adhesive or binder between the core layer of the packaging laminate and each respective outer polylactide layer. According to the invention, it has proved that the core layer and outer polylactide layers of the packaging laminate can be bonded to one another with extraordinarily good bonding strength even if the outer polylactide layers are extruded at low extrusion temperatures, such as at most approximately 200°C. In the present invention, this low extrusion temperature is, as opposed to the prior art technique, advantageous in that it makes possible the production of the packaging laminate at increased production output rates.

According to the present invention, the core layer consists, as has already been mentioned, of paper or paperboard, which are biodegradable materials often employed in the packaging industry to produce rigid, but foldable packaging laminates.

### BRIEF DESCRIPTION OF THE ACCOMPANYING DRAWINGS

The present invention will now be described in greater detail hereinbelow, with particular reference to the accompanying Drawings, in which:
Fig. 1 schematically illustrates a cross-section through a packaging laminate according to the present invention;
Fig. 2 schematically illustrates how the packaging laminate of Fig. 1 may be produced employing the method according to one embodiment of the present invention;
Fig. 3 schematically illustrates how the packaging laminate in Fig. 1 may be produced employing the method according to another embodiment of the present invention; and
Fig. 4 schematically illustrates a package of conventional type produced from a packaging laminate according to the present invention.

### DESCRIPTION OF PREFERRED EMBODIMENTS

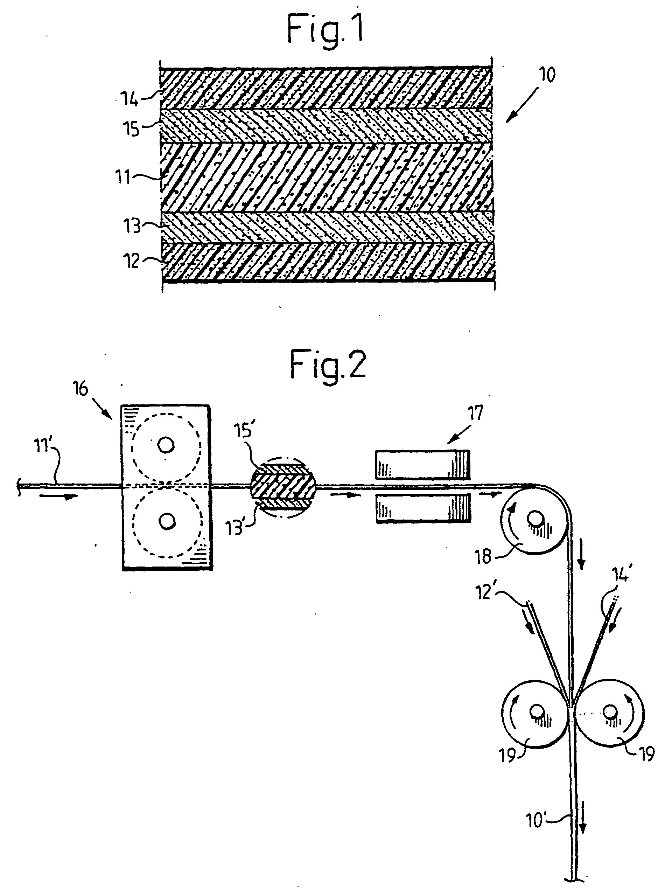

Fig. 1 thus schematically shows a cross-section through a sheet or web-shaped packaging material according to the present invention which has been given the general reference numeral 10. Although the packaging laminate 10 in Fig. 1 is illustrated as displaying but five individual material layers 11 - 15, the packaging laminate 10 may thus comprise one or more additional layers without departing from the inventive concept as herein disclosed and defined in the appended Claims. However, for the sake of clarity, only those material layers essential to an understanding of the present invention are shown.

The packaging laminate 10 in Fig. 1 comprises a configurationally rigid, but foldable core layer 11 of paper or paper board which imparts to the packaging laminate 10 the desired rigidity and mechanical stability.

Outer layers 12 and 14, respectively, of polylactide are disposed on both sides of the core layer 11. The two outer layers 12 and 14 are moisture and liquid-tight and are employed to impart to the packaging laminate 10 tightness properties vis-à-vis moisture and liquids.

In the illustrated embodiment of the packaging laminate 10 according to the invention, the two outer layers 12 and 14 consist of polylactide which is heat-sealable and thereby makes possible the production of packages through a simple conventional heat sealing of the packaging laminate 10.

The two outer polylactide layers 12 and 14 are bonded to the core layer 11 by the intermediary of interjacent adhesive or binder layers 13 and 15, respectively, of biodegradable materials, as this expression has been defined in the foregoing.

The biodegradable binder or adhesive according to the present invention is, as was mentioned earlier, an ethyl vinyl acetate copolymer (EVA) which, with extraordinarily good bonding strength, can bond the two outer polylactide layers 12 and 14 to the core layer 11 for the formation of a well-integrated packaging laminate 10. The superior bonding strength between the two outer polylactide layers 12 and 14 and the core layer 11 will also be achieved when the polylactide layers 12 and 14 are applied by extrusion at low temperature, for example 200°C or lower which, in the known prior art technique would have been far too low to achieve satisfactory bonding strength between the polylactide layers and the paper or paperboard layer.

The packaging laminate 10 in Fig. 1 can, according to the invention, be produced in the manner which is illustrated schematically in Fig. 2. In order to facilitate a comparison between Figs. 1 and 2, the same reference numerals have been employed for the same or corresponding packaging laminate parts, but with the addition of a prima symbol (').

A web 11' of paper or paperboard is unwound from a magazine reel (not shown) in the direction intimated by the arrow to the left in Fig. 2. The web 11' is covered or coated at 16 with an aqueous dispersion of ethyl vinyl acetate copolymer (EVA), which is applied in thin continuous layers 13' and 15', respectively, on both sides of the web.

The aqueous dispersion is applied to the web 11' in a quantity corresponding to between 0.5 and 5.0 g/m² which, according to the present invention, is an optimum application quantity for achieving the sought-for superior bonding strength between the layers in the packaging laminate.

After application of the aqueous dispersion of EVA, the coated web 11' is dried at 17, by heating so as to remove (evaporate) water and adjusts the moisture content of the applied binder layers 13' and 15' to a suitable level.

The dried web 11' is thereafter led via a bending roller 18 through the nip between heated rollers 19 at the same time as prefabricated web-shaped films 12' and 14' of polylactide, are united with the web from both sides thereof and are permanently bonded to the web under the application of heat and pressure on passage through the nip between the heated rollers 19.

The laminated packaging material web 10' from the lamination operation at the rollers 19 may thereafter be rolled up onto magazine reels for further transport and handling, or be led into a packing machine of the type which, from web-shaped packaging materials, forms, fills and produces finished packages in a per se known manner.

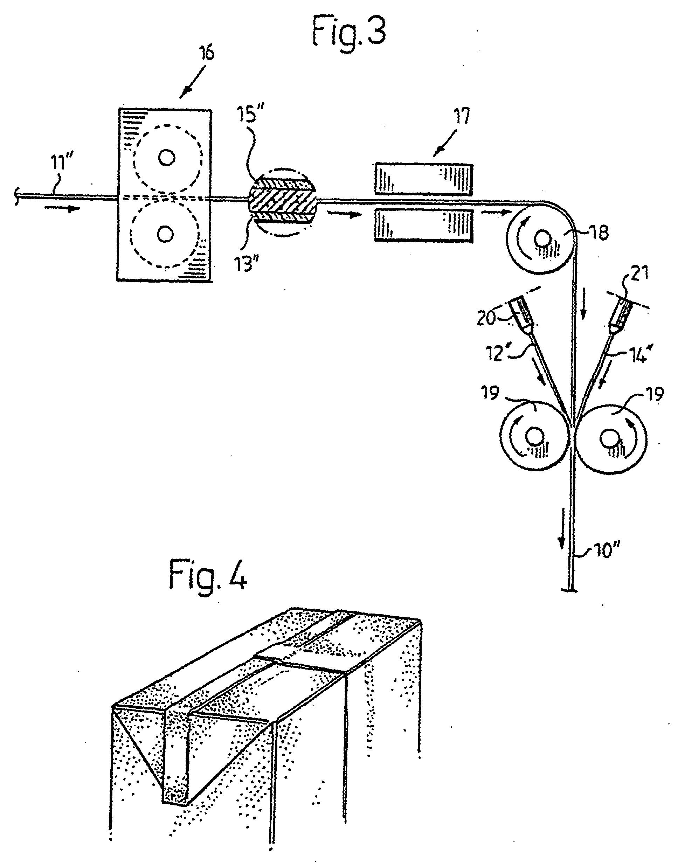

Fig. 3 schematically illustrates a method of producing a packaging laminate 10 according to another embodiment of the present invention. Also in this Figure, the same reference numerals as in Fig. 1 have been employed for the same or corresponding packaging laminate parts, but with the addition of a second symbol (").

The method according to the invention as illustrated in Fig. 3 differs from the method according to the invention which is illustrated in Fig. 2 principally in that the two outer polylactide payers 12" and 14" are produced by an extrusion process in connection with the lamination process employing the heated rollers 19, while corresponding polylactide layers in the preceding Example consisted of web-shaped prefabricated polylactide films.

After covering or coating at 16 with an aqueous dispersion of ethyl vinyl acetate copolymer (EVA) in a quantity of between 0.5 and 5.0 g/m² on both sides of the web 11", and drying of the applied EVA layers 13" and 15" at 17, the web 11" is led via the bending roller 18 through the nip between the heated rollers 19, at the same time as thin continuous layers 12" and 14" of polylactide, are extruded by means of extruders 20 and 21, respectively, onto both sides of the web, for the formation of a well-integrated web-shaped packaging laminate 10".

Also in this case, the thus produced web-shaped packaging laminate 10" may be rolled up onto magazine reels for transport and further handling, or be led into a conventional packing and filling machine of the type which forms, fills and seals packages in a per se known manner.

Finally, Fig. 4 schematically illustrates the upper portion of a conventional packaging container 22 of the Tetra Brik® type which may be produced from a packaging laminate 10 according to the invention.

The packaging container 22 in Fig. 4 is produced from a web-shaped packaging laminate which is provided with crease lines, in that both of the longitudinal edges of the web are united with one another in a lap seal or joint for the formation of a tube. The tube is filled with the desired contents and is divided into closed packages by repeated transverse sealing of the tube transversely of the longitudinal direction of the tube and beneath the relevant level of contents in the tube. The packages are separated from one another by incisions in the transverse sealing zones and are given the desired geometric configuration, normally parallelepipedic, by a final forming and sealing operation, for the formation of finished, filled packages 22 of the type shown in the Figure.

After emptying, the packaging container 22 according to the invention may be composted in an environmentally and ecologically acceptable manner by biodegradation, without accompanying, environmentally hazardous chemical degradation products.

In order to accelerate the biodegradation or composting of the used packages according to the invention, these packages may be ground or comminuted by other means in order to facilitate access for moisture and micro-organisms to the biodegradable material in the ground or comminuted mass of packaging material.

One particular advantage inherent in the packaging container according to the present invention is, thus, that it mat readily and rapidly be degraded or broken down into its naturally occurring component parts without the need to admix hazardous chemical additives.

Hence, it will be apparent from the foregoing disclosures that the objects of the present invention may easily and efficiently be attained employing readily available materials from renewable raw materials sources and employing already existing techniques and equipment.

## Claims

1. A method of producing a packaging laminate for a liquid-tight package, said packaging laminate (10) comprising a core layer (11) of paper or paperboard, and outer layers (12,14) of a polylactide which are applied on both sides of the core layer and are bonded with good bonding or adhesive strength to the interjacent core layer (11) by the intermediary of a layer of an ethyl vinyl acetate copolymer, **characterized in that** a web (11") of paper or paperboard on one or both of its sides is coated with a thin continous layer (13", 15") of an aqueous dispersion of an ethyl vinyl acetate copolymer in a quantity corresponding to between 0.5 and 5.0 g/m² on one or both sides respectively of the web (11'); **that** the coated web is dried for removing (evaporating) water; and that the dried web is covered with a thin layer (12", 14") of a polylactide which is extruded onto both sides of the web for the formation of the finished, well-integrated packaging laminate (10").

## Patentansprüche

1. Verfahren zur Herstellung eines mehrschichtigen Verpackungsmaterials für eine flüssigkeitsdichte Packung, wobei das mehrschichtige Verpackungsmaterial (10) aufweist eine Kernschicht (11) aus Papier oder Karton und äußere Schichten (12,14) aus einem Polylaktid, die auf beide Seiten der Kernschicht aufgebracht werden und mit einer guten Haftkraft oder Klebekraft mit der dazwischenliegenden Kernschicht (11) verbunden werden durch das Dazwischenlegen bzw. Dazwischenanbringen einer Schicht aus Ethylvinylazetat-Copolymer (EVA), **dadurch gekennzeichnet, dass** eine Bahn (11'') aus Papier oder Karton auf einer oder beiden Seiten mit einer dünnen kontinuierlichen Schicht (13'', 15'') einer wässrigen Lösung von Ethylvinylazetat-Copolymer in einer Menge zwischen 0,5 und 5,0 g/m² beschichtet wird; **dass** die beschichtete Bahn getrocknet wird, um Wasser zu entfernen (verdampfen); **und dass** die getrocknete Bahn mit einer dünnen Schicht (12'', 14'') aus Polylaktid beschichtet wird, die auf beide Seiten der Bahn extrudiert wird, um das fertige, gut integrierte, mehrschichtige Verpackungsmaterial (10'') herzustellen.

## Revendications

1. Procédé de production d'un stratifié d'emballage pour un emballage étanche aux liquides, ledit stratifié d'emballage (10) comprenant une couche centrale (11) de papier ou de carton, et des couches extérieures (12, 14) d'un polylactide qui sont appliquées sur les deux faces de la couche centrale et qui sont liées avec une bonne force de liaison ou d'adhérence à la couche centrale (11) située entre elles par l'intermédiaire d'une couche d'un copolymère d'acétate d'éthyle et de vinyle, **caractérisé en ce qu'**une bande (11") de papier ou de carton sur l'une de ses faces ou les deux est revêtue d'une couche mince continue (13", 15") d'une dispersion aqueuse d'un copolymère d'acétate d'éthyle et de vinyle en une quantité correspondant à 0,5 à 5,0 g/m² respectivement sur l'une des faces ou les deux de la bande (11') ; **en ce que** la bande revêtue est séchée pour éliminer (évaporer) l'eau ; et **en ce que** la bande séchée est recouverte d'une couche mince (12", 14") d'un polylactide qui est extrudée sur les deux faces de la bande pour la formation du stratifié d'emballage (10") bien intégré fini.
